# EUROPEAN PATENT APPLICATION

(11) **EP 4 195 594 A1**
(43) Date of publication of application: **14.06.2023**
(21) Application number: 21853344.6
(22) Date of filing: 04.08.2021
(51) Int. Cl.: H04L 12/00

(54) **CONGESTION CONTROL METHOD AND APPARATUS, NETWORK NODE DEVICE AND COMPUTER-READABLE STORAGE MEDIUM**

(30) Priority: 07.08.2020 CN 202010789061
(71) Applicant: ZTE Corporation, Shenzhen, Guangdong 518057 (CN)
(72) Inventor: WANG, Tongle, Shenzhen, Guangdong 518057 (CN)
(74) Representative: Canzler & Bergmeier Patentanwälte Partnerschaft mbB
(86) International application number: PCT/CN2021/110501
(87) International publication number: WO 2022/028456

(57) **Abstract**

The present application relates to the technical field of communications. Provided are a congestion control method and apparatus, a network node device and a computer-readable storage medium. The method comprises: according to receiving timestamp information and sending timestamp information of a received message, calculating a forwarding delay value of the message inside a node device; and in response to the forwarding delay value of the message inside the node device being greater than a preset delay threshold value of the message, marking the message with a congestion notification mark, so as to perform congestion control on the message by means of the congestion notification mark.

## Description

### CROSS-REFERENCE TO RELATED APPLICATIONS

The present application claims the priority of Chinese Patent Application No. 202010789061.6, filed on August 7, 2020, the contents of which are incorporated herein in their entirety by reference.

### TECHNICAL FIELD

The present application relates to the field of communication technology.

### BACKGROUND

Applications such as online intensive services, deep learning, high frequency transactions, and the like of a data center proposed challenges to the existing Ethernet. The existing Ethernet is a lossy network, which may cause local congestion, resulting in performance losses such as delay, packet loss, network throughput reduction, and the like, and affect customer experience. Therefore, low-delay services of the data center are expected to be supported by a lossless network, and congestion control is desired to be performed on packet transmission in the lossless network.

### SUMMARY

In an aspect, the present application provides a congestion control method, including: calculating a forwarding delay of a received packet in a node device according to receiving timestamp information and sending timestamp information of the packet; and in response to that the forwarding delay of the received packet in the node device is greater than a preset delay threshold of the packet, performing congestion notification marking on the packet, so as to perform congestion control on the packet through the congestion notification marking.

In an aspect, the present application provides a congestion control apparatus, including: a delay threshold calculating module configured to calculate a forwarding delay of a received packet in a node device according to receiving timestamp information and sending timestamp information of the packet; and a congestion notification mark carrying module configured to, in response to that the forwarding delay of the received packet in the node device is greater than a preset delay threshold of the packet, perform congestion notification marking on the packet, so as to perform congestion control on the packet through the congestion notification marking.

In an aspect, the present application provides a network node device, including: at least one processor; and a memory having at least one program stored thereon, the at least one program, when executed by the at least one processor, causes the least one processor to perform the method provided in the present application.

In an aspect, the present application provides a computer-readable storage medium having a computer program stored thereon, the computer program, when executed by a processor, causes the processor to perform the method provided in the present application.

### BRIEF DESCRIPTION OF DRAWINGS

Fig. 1 is a flowchart illustrating a congestion control method according to the present application.
Fig. 2 is a schematic structural diagram of a centralized forwarding network node device according to the present application.
Fig. 3 is a schematic structural diagram of a distributed forwarding network node device according to the present application.
Fig. 4 is a flowchart of performing congestion notification marking according to an ingress port according to the present application.
Fig. 5 is a flowchart of performing congestion notification marking according to an egress port according to the present application.
Fig. 6 is a flowchart of performing congestion notification marking according to an ingress port and priority according to the present application.
Fig. 7 is a flowchart of performing congestion notification marking according to an egress port and priority according to the present application.
Fig. 8 is a flowchart of performing congestion notification marking according to an access control list according to the present application.
Fig. 9 is a schematic structural diagram of a network node obtaining timestamp information and performing congestion notification marking at a physical port according to the present application.
Fig. 10 is a schematic structural diagram of a congestion control apparatus according to the present application.
Fig. 11 is a schematic diagram of exemplary hardware architecture of a computing device according to the present application.

### DETAILED DESCRIPTION

In order to make purposes, technical solutions, and advantages of the present application clearer, embodiments of the present application are described below with reference to the accompanying drawings. It should be noted that the embodiments of the present application and characteristics in the embodiments may be combined with each other if no conflict is incurred.

In the present application, low-delay services of a data center are expected to be supported by a lossless network, and explicit congestion notification (ECN) and priority-based flow control (PFC) technologies, as important means for avoiding congestion, are often applied to congestion control of the lossless network.

In Request For Comments (RFC) 3168, reserved bits of Terms of Service (TOS) in an Internet Protocol (IP) header is redefined as an ECN field. Currently, congestion control of network nodes is allowed to be implemented by the ECN marking technology through a Remote Direct Memory Access (RDMA) over Converged Ethernet (ROCE) network.

For a network node that enables an ECN function, generally, ECN marking is performed on a packet having an ECN capability in response to that an egress queue is congested, after the packet marked as congestion reaches a destination end, the destination end may feedback congestion information to a source end sending the packet, and the source end sending the packet performs speed reduction processing on a congested flow. A purpose of speed reduction, on the one hand, is to avoid packet loss due to congestion occurred in network nodes, on the other hand, for delay sensitive services, avoid a greater transmission delay caused by a large number of packets being cached in local. In the network node, an existing ECN marking method generally determines whether to perform ECN marking according to congestion degree of an egress queue during enqueue or dequeue operations of a packet. If a depth of the queue exceeds a preset ECN marking threshold, the ECN marking is performed on the packet, if the depth of the queue does not exceed the preset ECN marking threshold, the ECN marking is not performed on the packet.

The above marking method is a method for simplifying the congestion of the packet in the network node to be represented by the congestion of the egress queue. However, a complete forwarding process of a packet in the network node may go through a plurality of stages such as packet receiving in the ingress port, ingress port caching, uplink forwarding processing, uplink traffic management, switching network, downlink forwarding processing, and downlink traffic management. The congestion degree of the egress queue only reflects congestion of the packet in the egress queue in the traffic management stage, and does not completely reflect a complete internal congestion situation of the packet in the network node from the ingress port receiving the packet to the egress port sending the packet.

In an actual application scenario, a packet may experience a plurality of competitions of resources during an internal forwarding process, the resources include ingress cache resource, forwarding lookup table resource, packet uplink traffic manager (TM) resource, switching network forwarding and downlink TM resource, and the like, and the competitions of the resources may cause congestion and an increase in forwarding delay of the packet. Therefore, the ECN marking performed only according to the congestion degree of the egress queue has a limitation, and cannot completely reflect a delay of the packet in the whole network node due to competitions of resources. A large number of delay-sensitive services exist in applications of the lossless network, guarantee of low delay of the services expects not only sensing the congestion of an egress queue, but also sensing a forwarding delay of the whole network node to perform corresponding congestion control, so as to avoid a poor customer experience caused by large delay of the network node.

The PFC technology is a congestion control technology frequently used in lossless networks, but may cause Head-of-line blocking (HOL). Packets input from a same ingress port may be forwarded to a plurality of egress ports including congested egress ports and uncongested egress ports. However, PFC flow control at an ingress port may cause all traffics with a same priority at the ingress port to be stopped being sent, thus, traffics to be forwarded to other uncongested egress ports are also congested, so that the HOL is caused, and in severe cases, the congestion may be caused to spread, the network throughput would drop sharply.

The present application provides a congestion control method, the ECN marking is performed on the packet based on the delay by calculating a complete forwarding delay of the packet in the network node, so that delay expectations of low-delay services in network transmission are ensured and the HOL of the PFC is improved.

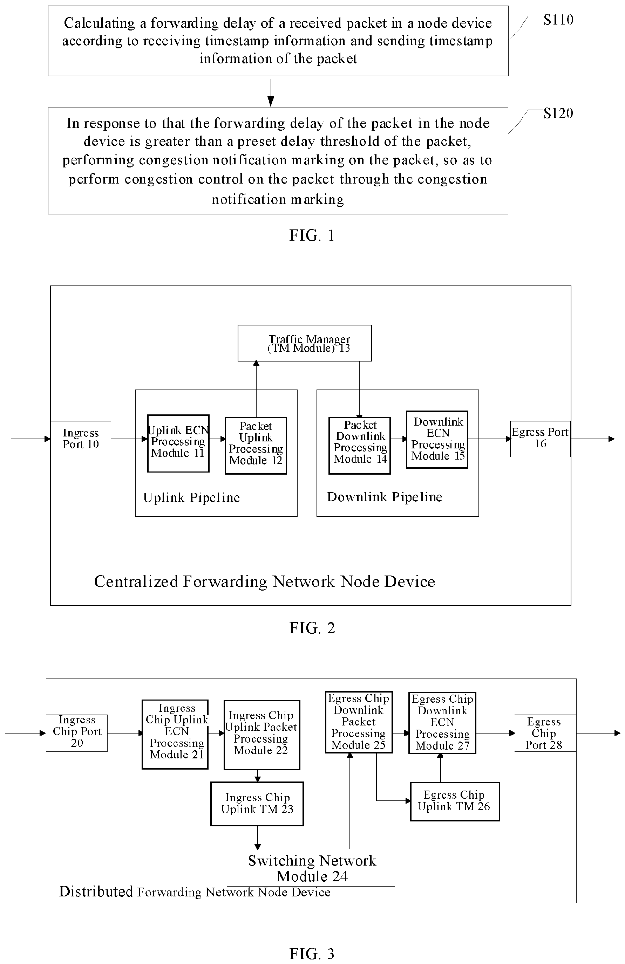

Fig. 1 is a flowchart illustrating a congestion control method according to the present application. As shown in Fig. 1, the congestion control method may include operations S 110 and S 120.

At operation S 110, calculating a forwarding delay of a received packet in a node device according to receiving timestamp information and sending timestamp information of the packet.

At operation S 120, in response to that the forwarding delay of the received packet in the node device is greater than a preset delay threshold of the packet, performing congestion notification marking on the packet, so as to perform congestion control on the packet through the congestion notification marking.

According to the congestion control method provided in the present application, the complete forwarding delay of the packet in the network node can be calculated according to a receiving timestamp acquired in a packet receiving stage and a sending timestamp acquired before sending the packet, and in response to that the forwarding delay is greater than the preset delay threshold of the packet, the congestion notification marking is performed on the packet; therefore, the congestion notification marking is performed by detecting the complete forwarding delay of the packet in the network node, and the delay expectations of the low-delay services in the network transmission can be ensured.

In some implementations, in a preset packet receiving stage, the congestion control method further includes: at operation S140, in response to that a function of congestion notification marking is determined not to be enabled for the packet, configuring a second timestamp mark of the packet; at operation S141, before sending the packet, determining that the function of congestion notification marking is not enabled according to the second timestamp mark, and forwarding the packet according to a preset forwarding mode. The second timestamp mark is carried at a specified position of the packet or is transmitted as channel associated information of the packet.

The congestion control method provided in the present application can be applied to a network node device, which may be a centralized forwarding network node device or a distributed forwarding network node device. Functional components of the centralized forwarding network node device and the distributed forwarding network node device provided in the present application and structural relationships between the functional components are respectively described with reference to Fig. 2 and Fig. 3.

Fig. 2 is a schematic structural diagram of a centralized forwarding network node device according to the present application. As shown in Fig. 2, the functional components of the centralized forwarding network node device provided in the present application may include: an ingress port 10, an uplink ECN processing module 11, a packet uplink processing module 12, a traffic manager (TM module) 13, a packet downlink processing module 14, a downlink ECN processing module 15, and an egress port 16.

The ingress port 10 and the egress port 16 may be Physical (PHY) ports. The uplink ECN processing module 11 and the packet uplink processing module 12 form an uplink pipeline of the centralized forwarding network node device for processing the packet. The packet downlink processing module 14 and the downlink ECN processing module 15 form a downlink pipeline of the centralized forwarding network node device for processing the packet.

In some implementations, in the centralized forwarding network node device, the packet receiving stage includes any stage of performing packet processing from the ingress port 10 of the node device to a forwarding chip of the node device; and a packet processing stage before sending the packet includes any stage of performing packet processing from the forwarding chip of the node device to the egress port 16 of the node device.

An uplink processing of the packet by the forwarding chip of the node device may refer to processing of the packet by the uplink ECN processing module 11 and the packet uplink processing module 12 as shown in Fig. 2; a downlink processing of the packet by the forwarding chip of the node device may refer to processing of the packet by the packet downlink processing module 14 and the downlink ECN processing module 15 as shown in Fig. 2.

It can be known from Fig. 2 that, the ingress port 10 may be configured to perform packet receiving and packet caching, the uplink ECN processing module 11 may be configured to acquire a delay threshold template, the packet uplink processing module 12 may be configured to perform uplink forwarding processing on the packet, the TM 13 is configured to perform traffic management, the packet downlink processing module 14 may be configured to perform downlink forwarding processing on the packet, the downlink ECN processing module 15 is configured to acquire a delay threshold template, and the egress port 16 is configured to send the packet, so that a complete forwarding process of the packet by the centralized forwarding node device is realized.

Fig. 3 is a schematic structural diagram of a distributed forwarding network node device according to the present application. As shown in Fig. 3, the distributed forwarding network node device may include an ingress chip port (referred to as an ingress port) 20, an ingress chip uplink ECN processing module 21, an ingress chip uplink packet processing module 22, an ingress chip uplink TM 23, a switching network module 24, an egress chip downlink packet processing module 25, an egress chip downlink TM 26, an egress chip downlink ECN processing module 27, and an egress chip port (referred to as an egress port) 28. The ingress chip port 20 and the egress chip port 28 may be PHY ports.

In some implementations, in the distributed forwarding network node device, the packet receiving stage includes any stage of performing packet processing from the ingress port 20 of the node device to an uplink forwarding chip of the node device; and a packet processing stage before sending the packet includes any stage of performing packet processing from a downlink forwarding chip of the node device to the egress port 28 of the node device.

An uplink processing of the packet by the uplink forwarding chip of the node device may refer to processing of the packet by the ingress chip uplink ECN processing module 21, the ingress chip uplink packet processing module 22, and the ingress chip uplink TM 23 as shown in Fig. 3; a downlink processing of the packet by the forwarding chip of the node device may refer to processing of the packet by the egress chip downlink packet processing module 25, the egress chip downlink TM 26, and the egress chip downlink ECN processing module 27 as shown in Fig. 3.

It can be known from Fig. 3 that, the ingress chip port (referred to as the ingress port) 20 may be configured to perform packet receiving and packet caching, the ingress chip uplink ECN processing module 21 may be configured to acquire a delay threshold template, the ingress chip uplink packet processing module 22 may be configured to perform uplink forwarding processing on the packet, the ingress chip uplink TM 23 is configured to perform uplink traffic management, the switching network module 24 is configured to perform switching network forwarding on the packet, the ingress chip downlink packet processing module 25 may be configured to perform downlink forwarding processing on the packet, the egress chip downlink TM 26 is configured to perform downlink traffic management, the egress chip downlink ECN processing module 27 is configured to acquire a delay threshold template, and the egress chip port (referred to as the egress port) 28 is configured to send the packet, so that a complete forwarding process of the packet by the distributed forwarding node device is realized.

The network node device receives a packet from an ingress port, identifies a data flow capable of enabling an ECN function according to preset configuration information in the packet receiving stage, performs ECN marking on the packet corresponding to the data flow and stamps a system timestamp serving as a packet receiving timestamp for the packet.

In some implementations, before operation S110, the congestion control method may further include: at operation S10, in a preset packet receiving stage, determining whether to enable a function of congestion notification marking for the packet according to flow matching information corresponding to the received packet; at operation S11, in response to that the function of congestion notification marking is determined to be enabled, acquiring the receiving timestamp information of the packet, and configuring a delay threshold template of the packet including the preset delay threshold.

In operation S10, the flow matching information includes at least one of: ingress traffic, egress traffic, an ingress port, an egress port, a priority of the packet, or feature information of the packet. In operation S 11, a first timestamp mark is used to indicate that the function of congestion notification marking is enabled, a delay threshold template number is used to index the preset delay threshold template including the preset delay threshold.

Through preset items of the flow matching information, for different data flows, a function of delay marking may be enabled, and corresponding delay threshold templates are configured. The items of the flow matching information may be identified and matched based on a granularity such as global, port, port and priority, flow characteristic and the like.

In some implementations, after operation S11, the congestion control method may further include: at operation S12, determining a first timestamp mark and a corresponding delay threshold template number for the packet. The first timestamp mark is configured to indicate that the function of congestion notification marking is enabled, and the delay threshold template number is configured to index a configured delay threshold template.

In some implementations, operation S11 may specifically include: before sending the packet, in response to that the first timestamp mark of the packet is detected, calculating a difference value between the receiving timestamp information and the sending timestamp information to obtain the forwarding delay of the packet, and acquiring the preset delay threshold of the packet according to the delay threshold template number corresponding to the packet.

The first timestamp mark, the receiving timestamp information and the corresponding delay threshold template number are carried at a specified position of the packet, or are transmitted as channel associated information of the packet.

According to the congestion control method provided in the present application, in response to that the function of congestion notification marking is determined to be enabled according to the items of the flow matching information, the complete forwarding delay of the packet in the network node can be calculated according to the receiving timestamp acquired in the packet receiving stage and the sending timestamp acquired before sending the packet, and in response to that the forwarding delay is greater than the preset delay threshold of the packet, the congestion notification marking is performed on the packet; therefore, the congestion notification marking is performed by detecting the complete forwarding delay in the network node, and the delay expectations of the low-delay services in the network transmission can be ensured.

In some implementations, the receiving timestamp may be acquired at any position from the ingress port to the traffic manager, which is not limited herein.

In some implementations, a corresponding delay threshold template may be obtained based on a flow. For example, the uplink ECN processing module 11 in Fig. 2 and the ingress chip uplink ECN processing module 21 in Fig. 3 may be configured to obtain a corresponding delay threshold template based on the flow.

In some implementations, in response to that the node device is a centralized forwarding node device, after operation S 110 and before operation S120, the congestion control method may further include: at operation S21, forwarding the packet in the node device, and sending the packet to a forwarding chip of the node device.

In some implementations, in response to that the node device is a distributed forwarding node device, after operation S 110 and before operation S120, the congestion control method may further include: at operation S22, forwarding the packet to downlink forwarding information of the node device through a switching network in the node device.

In some implementations, during the packet passing through the switching network, the first timestamp mark, the receiving timestamp information, and the corresponding delay threshold template number are carried at a specified position of the packet, the specified position is in the packet or in an additional packet header corresponding to the switching network. That is, the first timestamp mark, the receiving timestamp information, and the corresponding delay threshold template number may be carried in the packet, or in an additional packet header of the packet corresponding to the switching network.

In a forwarding process of the packet in the network node device, a timestamp mark, receiving timestamp information, and a delay threshold template number are transmitted together with the packet in the network node device.

If the node device is a centralized device, referring to processing of the packet by the packet downlink processing module 14 and the downlink ECN processing module 15 in Fig. 2, the above information together with the packet is forwarded to the forwarding chip of the network node device for downlink processing.

If the node device is a distributed device, referring to processing of the packet by egress chip downlink packet processing module 25, the egress chip downlink TM 26, and the egress chip downlink ECN processing module 27 in Fig. 3, and the above information together with the packet, after forwarded by the switching network, is forwarded to the downlink forwarding chip of the network node for processing.

The packet carrying above three pieces of information is forwarded in the network node. For the centralized forwarding network node, the three pieces of information (the first timestamp mark, the receiving timestamp information, and the corresponding delay threshold template number) together with the packet pass through the uplink processing module of the uplink pipeline, and then reach the downlink processing module of the downlink pipeline. For the distributed forwarding network node, the three pieces of information together with the packet pass through the switching network module 24, and may be carried in the packet or carried in the additional packet header of the packet during passing through the switching network, which is not limited herein. The packet reaches the downlink processing module of the egress chip after passing through the switching network.

Before sending the packet from the egress port, for example, the network node device may select any stage from the downlink pipeline of the forwarding chip for packet processing to an egress PHY to obtain a system timestamp as a sending timestamp of the packet.

As an example, if the network node device is a centralized device, the downlink ECN processing module 15 in Fig. 2 may be configured to acquire a forwarding delay of the packet by calculating a difference value between the receiving timestamp and the sending timestamp, acquire a delay threshold through a delay configuration template, and perform ECN marking on the packet in response to that the forwarding delay is greater than the threshold configured by the delay threshold template.

As an example, if the network node device is a distributed device, the egress chip downlink ECN processing module 27 in Fig. 3 may be configured to acquire a forwarding delay of the packet by calculating a difference value between the receiving timestamp and the sending timestamp, acquire a delay threshold through a delay configuration template, and perform ECN marking on the packet in response to that the forwarding delay is greater than the threshold configured by the delay threshold template.

It can be known from the above, according to the congestion control method provided in the present application, the ECN marking can be performed by detecting the complete forwarding delay of the packet in the network node, thereby delay expectations of the low-delay services in the network transmission is ensured.

The uplink ECN processing module 11 in Fig. 2 and the ingress chip uplink ECN processing module 21 in Fig. 3 may implement functions the same or equivalent to each other, the packet uplink processing module 12 in Fig. 2 and the ingress chip uplink packet processing module 22 in Fig. 3 may implement functions the same or equivalent to each other, the packet downlink processing module 14 in Fig. 2 and the egress chip downlink packet processing module 25 in Fig. 3 may implement functions the same or equivalent to each other, and the downlink ECN processing module 15 in Fig. 2 and the egress chip downlink ECN processing module 27 in Fig. 3 may implement functions same or equivalent to each other. Therefore, for convenience of description, in following description, in a case where a module in the centralized forwarding network node device is taken as an example for describing a corresponding packet processing process, a corresponding module in the distributed forwarding network node device have a function the same or equivalent to that of the module in the centralized forwarding network node device, which will not be repeated again; similarly, in a case where a module in the distributed forwarding network node device is taken as an example for describing a corresponding packet processing process, a corresponding module in the centralized forwarding network node device has a function the same or equivalent to that of the module in the distributed forwarding network node device, which will not be repeated again.

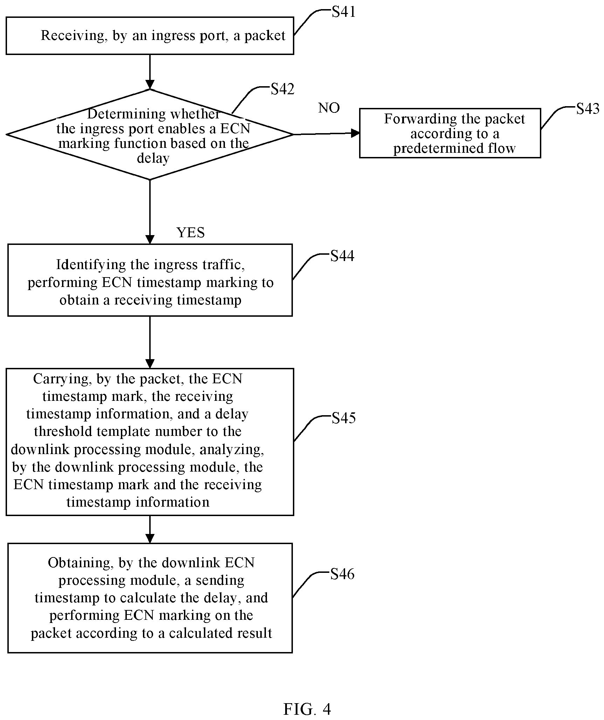

Fig. 4 is a flowchart of performing congestion notification marking according to an ingress port according to the present application. As shown in Fig. 4, in some implementations, a process of performing congestion notification marking according to an ingress port may specifically include following operations S41 to S46.

At operation S41, receiving, by an ingress port, a packet.

At operation S42, determining whether the ingress port enables a ECN marking function based on the delay. Users can select one of a service choreographer, a controller, a network manager, a command line or the like, to enable the ECN marking function based on the delay for the ingress port of the network node, and configure a corresponding delay threshold template for the ECN marking function based on the delay, a main parameter in the configured template includes the delay threshold. The ECN marking function being enabled and configuration information related to the delay threshold template may be recorded in an interface attribute table or other table, which is not limited specifically.

At operation S43, in response to that the ECN marking function based on the delay is not enabled, forwarding the packet according to a predetermined flow. In this operation, if the ECN marking function is not enabled by the ingress port, the packet is normally forwarded according to the original predetermined flow.

At operation S44, in response to that the ECN marking function based on the delay is enabled by the ingress port, identifying the ingress traffic, performing ECN timestamp marking to obtain a receiving timestamp.

At operation S45, carrying, by the packet, the ECN timestamp mark, the receiving timestamp information, and a delay threshold template number to the downlink processing module, analyzing, by the downlink processing module, the ECN timestamp mark and the receiving timestamp information.

At operation S46, obtaining, by the downlink ECN processing module, a sending timestamp to calculate the delay, and performing ECN marking on the packet according to a calculated result.

The network node device identifies a packet received by the ingress port, for example, the identified packet is expected to be marked with three pieces of information in the uplink ECN processing module 11, a first piece of information is an ECN timestamp mark, a second piece of information is the receiving timestamp information of the ingress port, a third piece of information is the delay threshold template number. The ECN timestamp mark is used for indicating that the packet is stamped with a receiving timestamp by an ECN function; the delay threshold template number is used for indexing the delay threshold template, and different delay thresholds configured for services with different delay expectations are stored in different delay threshold templates. The ECN timestamp mark in the present application may be represented by one bit or multiple bits, which is not limited in the present application.

Taking the centralized forwarding network node device as an example, through a carried ECN timestamp mark, the downlink ECN processing module 15 may continue to acquire the sending timestamp and perform delay calculation after identifying the ECN timestamp mark, and compare the calculated delay with a delay threshold acquired through the delay threshold template indexed by the delay threshold template number, thereby deciding whether to perform the ECN marking.

The three pieces of information may be carried at any position in the packet, or may be selected as channel associated information of the packet to be transmitted, instead of being carried in the packet, which is not limited in the present application, such two manners both are within the protection scope of the present application.

The centralized forwarding network node device is continued to be taken as an example, the downlink processing module 14 may be responsible for downlink forwarding processing of the packet, and by using a packet analyzing function of the downlink processing module 14, the downlink processing module 14 may be configured to analyze a receiving timestamp mark, timestamp information and the delay threshold template. Such three analyzed pieces of information are used for the downlink ECN processing module 15. It should be noted that the analysis of the three pieces of information may also be performed in the downlink ECN processing module 15, instead of being performed in the downlink processing module 14. The specific position for analyzing the packet is not limited in the present application.

In operation S46, the downlink ECN processing module 15 acquires the sending timestamp to calculate the delay, and performs ECN marking on the packet according to the calculated result. In this operation, after acquiring the timestamp mark, the timestamp information, and the delay threshold template analyzed by the downlink processing module 14 or the module 15, the downlink ECN processing module 15 determines whether the timestamp mark is valid; the timestamp mark being valid indicates that the packet carries the receiving timestamp and logic processing of the ECN marking is expected to be performed thereon, and then the timestamp information is to be acquired. The timestamp mark being invalid indicates that the packet is not to be subjected to ECN marking processing based on the delay.

As an example, the timestamp mark being reset or set to be a first predetermined value indicates that the packet expects to use a function of congestion notification marking, i.e., the timestamp mark is valid; the timestamp mark being not reset or being set to a second predetermined value indicates that the packet does not expect to use the function of congestion notification marking, i.e., the timestamp mark is invalid. The timestamp mark being reset or set to be the first predetermined value is taken as a first timestamp mark, the timestamp mark being not reset or being set to the second predetermined value is taken as a second timestamp mark. The first predetermined value is different from the second predetermined value.

After judging based on the timestamp mark, for a packet expecting ECN marking based on the delay, the downlink ECN processing module 15 continues to acquire a current system timestamp as a sending timestamp of the packet, and calculates a difference value between the sending timestamp and the receiving timestamp. Meanwhile, the downlink ECN processing module 15 can obtain an ECN delay threshold by looking up a table according to the delay threshold template. If a calculated difference value between the timestamps exceeds a preset delay threshold of the delay threshold template, the ECN marking is performed on the packet.

In a case where the preset flow matching information as shown in Fig. 4 is an ingress port, operation S10 may include following operation S301. At operation S301, in response to that the packet is a packet received by the node device from a preset ingress port and the ingress traffic of the node device is lossless service traffic, determining that the function of congestion notification marking is to be enabled for the packet.

In some implementations, in response to that the received packet is a packet received by the node device from a preset ingress port and the ingress traffic of the node device is not lossless service traffic, or the ingress traffic of the node device is lossless service traffic, but the received packet is a packet received by the node device from other preset ingress ports except for the preset ingress port, the function of congestion notification marking is determined not to be enabled for the packet.

Correspondingly, operation S11 of the configuring a delay threshold template of the packet may include: at operation S302, taking a delay threshold template corresponding to a delay-expectation service carried by the packet as the delay threshold template of the packet. Different delay threshold templates are preset for different delay-expectation services.

In some implementations, the ingress port (or ingress interface) in operation S301, may be a physical port, a LAG port, various logical ports, or the like, which is not limited herein. It should be noted that the function of delay ECN marking being enabled based on the ingress port means that the ECN marking function based on the delay is enabled for a flow at the ingress port, but the ECN marking is not performed at the ingress port, and any ECN marking action is implemented in the downlink processing of the packet.

If it is known that certain ingress traffic is lossless traffic sensitive to packet loss and delay, the ECN marking function based on the delay can be enabled at the ingress port, so as to achieve a low delay during forwarding the ingress traffic, and after a destination end of the packet receives the packet with the ECN mark, flow control information is sent to notify a sending end to reduce a speed of the flow.

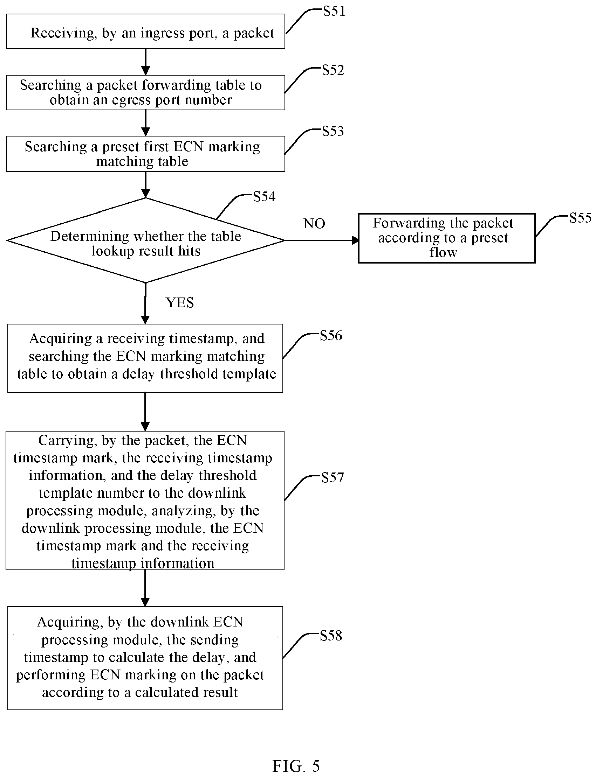

Fig. 5 is a flowchart of performing congestion notification marking according to an egress port according to the present application.

Multi-to-one Incast traffic is a phenomenon generated by highly parallelized cloud applications of a data center, Incast specifically refers to congestion occurring at an egress port of a network node connected to a client, during a plurality of servers simultaneously responding to a client request and simultaneously sending data to the client, in environments of the data center with a high-bandwidth, a low-delay and a limited-buffer, which has been proved to be reasons for causing much packet losses or delay increases in the data center. Based on the above scenario, the function of ECN marking based on the delay is configured at the egress port of the server connected with the client in a leaf node of the data center, so that packet losses or delay increases caused by Incast are effectively relieved.

As shown in Fig. 5, in some implementations, a process of preforming congestion notification marking according to an egress port may specifically include following operations S51 to S58.

At operation S51, receiving, by an ingress port, a packet.

At operation S52, searching a packet forwarding table to obtain an egress port number. In this operation, after receiving the packet, the network node searches for the egress port number from the forwarding table in the uplink pipeline.

At operation S53, searching a preset first ECN marking matching table. In this operation, configuration information may be recorded in the first ECN marking matching table. In the first ECN marking matching table, a key word for table lookup is the egress port number, a table lookup result is a delay threshold template. Forms of table storage and lookup are not limited, may be items of Access Control Lists (ACLs), or may be other types of Random Access Memory (RAM) tables.

At operation S54, determining whether the table lookup result hits.

At operation S55, if the table lookup result does not hit (i.e., misses), forwarding the packet according to a preset flow.

At operation S56, if the table lookup result hits, performing ECN timestamp marking on the packet, acquiring a receiving timestamp, and searching the ECN marking matching table to obtain a delay threshold template.

Through the above operations S54 to S56, after the egress port number is obtained in the uplink pipeline, the uplink ECN processing module 11 continues to search the first ECN marking matching table by taking the egress port number of the packet obtained by searching the forwarding table as a key word. If the table lookup result does not hit, the egress port ECN marking is not to be performed on the packet. If the table lookup result hits, a delay threshold template number is obtained from the table lookup result, and simultaneously, an ECN timestamp mark is configured for the packet, and simultaneously, a system timestamp is obtained as a packet receiving timestamp. In this way, three pieces of information to be stamped on the packet in the uplink are completely obtained.

At operation S57, carrying, by the packet, the ECN timestamp mark, the receiving timestamp information, and the delay threshold template number to the downlink processing module 14, and analyzing, by the downlink processing module 14, the ECN timestamp mark and the receiving timestamp information. In this operation, the analysis of the ECN timestamp mark and the receiving timestamp information may refer to operation S45 described in Fig. 4, and will not be repeated herein.

At operation S58, acquiring, by the downlink ECN processing module 15, the sending timestamp to calculate the delay, and performing ECN marking on the packet according to a calculated result.

The packet carrying the three pieces of information is forwarded in the network node. Forwarding designs of the three pieces of information together with the packet in the centralized and distributed network nodes may refer to packet forwarding processes in the network node device described above with reference to Fig. 2 and Fig. 3, and thus are not be repeated herein.

In the operation, the packet downlink processing module 14 may be responsible for analyzing the ECN timestamp mark, the receiving timestamp information, and the delay threshold template, the downlink ECN processing module 15 is responsible for determining the receiving timestamp mark, acquiring a sending timestamp, calculating a forwarding delay of the packet, and determining whether to perform ECN marking on the packet according to a comparison between the delay and the preset threshold. The analysis of the ECN timestamp mark and the receiving timestamp information may refer to operation S45 shown in Fig. 4, and will not be repeated herein.

In the implementation shown in Fig. 5, the flow matching information is the egress port; then operation S10 may include following operations S311 and S312. At operation S311, in response to that the packet is a packet received by the node device serving as a preset server and an egress port of the preset server is configured to send data of multi-to-one Incast traffic in a preset data center network, determining an egress port number of the packet by searching a preset packet forwarding table; at operation S312, in response to that a delay threshold template corresponding to the egress port number is searched in a preset first congestion notification marking matching table, determining that the function of congestion notification marking is to be enabled for the packet.

Correspondingly, operation S11 of the configuring a delay threshold template of the packet may include: at operation S314, taking a searched delay threshold template corresponding to the egress port number as the delay threshold template to be carried.

In some implementations, in response to that no delay threshold template corresponding to the egress port number is searched in the preset first congestion notification marking matching table, determining that the function of congestion notification marking is not to be enabled for the packet.

After receiving the packet carrying the ECN mark, a destination end of the packet sends flow control information to notify the sending end to reduce the speed of the flow.

In some implementations, operation S11 of the configuring a delay threshold template number to be carried in the packet, the congestion control method may further include: at operation S315, setting a delay threshold template number to be carried as a null value, and after determining that the function of congestion notification marking on the packet is enabled and before sending the packet, acquiring a delay threshold template corresponding to the egress port number from a preset attribute table of a downlink egress port.

In some implementations, the function of congestion notification marking is determined to be enabled according to the first timestamp mark of the packet.

The delay threshold template storing the delay threshold may also be obtained from the attribute table of the egress interface by the downlink processing module. Advantages of the mode for obtaining the delay threshold template from the attribute table of the downlink egress interface is that, the packet can be forwarded from the uplink pipeline to the downlink pipeline by only carrying the receiving timestamp mark and the timestamp information, rather than carrying the delay threshold template, so that occupation of additional information on an effective bandwidth of the switching network is reduced, and an acceleration ratio of the switching network is improved. The delay threshold template is obtained in the uplink and is carried to the packet downlink processing module 14, or is directly obtained by the packet downlink processing module 14, which is not limited in the present application.

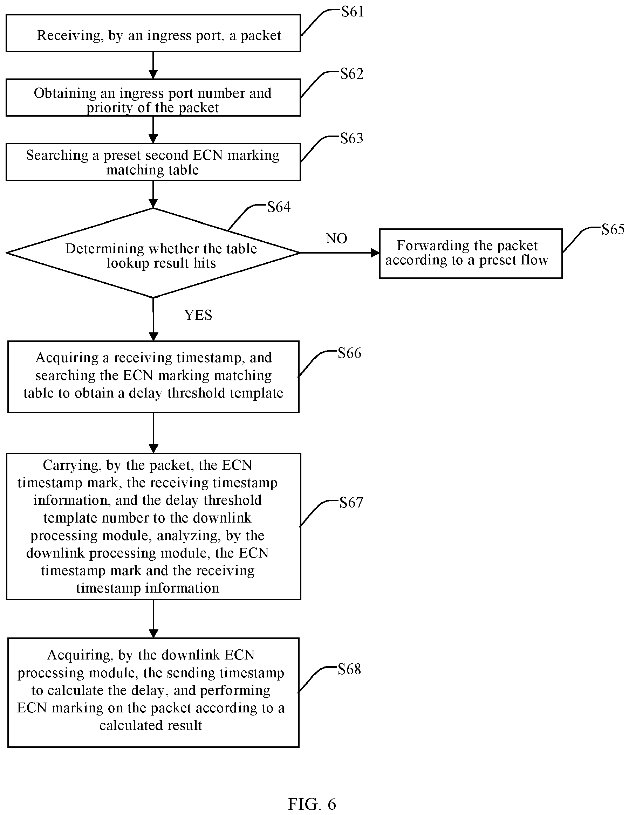

Fig. 6 is a flowchart of performing congestion notification marking according to an ingress port and priority according to the present application. The PFC is a flow control technology often used in a lossless network, and implements flow control based on an ingress port and priority of the packet, the flow control is a back pressure from an congested node to an uplink node, and has a disadvantage of causing HOL. That is, for an obvious disadvantage of that the PFC does not consider the congestion situation of the egress port and performs backpressure processing on packets forwarded to the non-congested egress, based on the above application scenario of the PFC, the function of delay ECN marking based on the ingress port and the priority of a packet is enabled at the network node of the data center.

As shown in Fig. 6, in some implementations, a process of performing congestion notification marking according to the ingress port and the priority may specifically include following operations S61 to S68.

At operation S61, receiving, by an ingress port, a packet.

At operation S62, obtaining an ingress port number and priority of the packet. In this operation, after receiving the packet, the network node device acquires the priority of the packet in the uplink pipeline. As an example, the priority may be obtained by mapping an 802. 1p field in an Ethernet header, or may be obtained by mapping a Differentiated Services Code Point (DSCP) field in an IP header, or may be obtained by mapping through other flow classification means, which is not limited herein.

At operation S63, searching a preset second ECN marking matching table. In this operation, users can select one of a service choreographer, a controller, a network manager, a command line or the like to enable the delay ECN marking function based on the ingress port and the priority for the network node, and configure a delay threshold template, a main parameter in the configured template is the delay threshold. The configuration information may be recorded in the second ECN marking matching table. In the second ECN marking matching table, key words for table lookup are "the ingress port number and the priority of the packet", and a table lookup result is a delay threshold template. Forms of table storage and lookup are not limited, may be items of ACL, or may be other types of RAM tables.

At operation S64, determining whether the table lookup result hits.

At operation S65, if the table lookup result does not hit (i.e., misses), forwarding the packet according to a preset flow.

At operation S66, if the table lookup result hits, performing ECN timestamp marking on the packet, acquiring a receiving timestamp, and searching the ECN marking matching table to obtain a delay threshold template.

Through the above operations S64 to S66, the uplink ECN processing module 11 continues to search the second ECN marking matching table by taking the ingress port number and the priority of the packet as key words. If the table lookup result does not hit (i.e., misses), the ECN marking based on the ingress port number and the priority of the packet is not to be performed on the packet. If the table lookup result hits, a delay threshold template number is obtained from the table lookup result, and simultaneously, an ECN timestamp mark is configured for the packet, and a system timestamp is obtained as a packet receiving timestamp. In this way, three pieces of information to be stamped on the packet in the uplink are completely obtained.

The packet carrying the three pieces of information is forwarded in the network node. Forwarding designs of the three pieces of information together with the packet in the centralized and distributed network nodes may refer to packet forwarding processes in the network node device described above with reference to Fig. 2 and Fig. 3, and thus are not be repeated herein.

At operation S67, carrying, by the packet, the ECN timestamp mark, the receiving timestamp information, and the delay threshold template number to the downlink processing module 14, and analyzing, by the downlink processing module 14, the ECN timestamp mark and the receiving timestamp information. In this operation, the analysis of the ECN timestamp mark and the receiving timestamp information may refer to operation S45 described in Fig. 4, and will not be repeated herein.

At operation S68, acquiring, by the downlink ECN processing module 15, the sending timestamp to calculate the delay, and performing ECN marking on the packet according to a calculated result. In this operation, the downlink ECN processing module 15 is responsible for determining the receiving timestamp mark, acquiring a sending timestamp, calculating a forwarding delay of the packet, and determining whether to perform ECN marking on the packet according to a comparison between the delay and the preset threshold. The processing flow may refer to operation S46 described in Fig. 4, and thus is not repeated herein.

After receiving the packet carrying the ECN mark, a destination end of the packet sends flow control information to notify a sending end to reduce the speed of the flow.

In the implementation shown in Fig. 6, the flow matching information is the ingress port and the priority of the packet; then operation S10 may include following operations S321 and S322.

At operation S321, in response to that the packet is a packet received by the node device from the ingress port and having priority information, the ingress traffic of the node device is lossless service traffic, and a delay threshold template number corresponding to an ingress port number and the priority information of the packet is searched in a preset second congestion notification marking matching table, determining that the function of congestion notification marking is to be enabled for the packet; at operation S322, in response to that the delay threshold template number corresponding to the ingress port number and the priority information of the packet is searched, determining that the function of congestion notification marking is enabled for the packet.

Correspondingly, operation S11 of the configuring a delay threshold template of the packet may specifically include: at operation S323, taking a searched delay threshold template corresponding to the ingress port number and the priority information as the delay threshold template of the packet.

The ECN marking function based on the delay considers an internal complete forwarding delay, and for a packet at an uncongested egress port, the delay is not increased due to congestion in an ingress traffic manager and an egress traffic manager, thereby, the delay of the packet at the uncongested egress port would not exceed the preset threshold, and ECN marking is not to be performed; the ECN marking is performed on only the packet at the congested egress port because the forwarding delay of the packet may exceed the preset delay threshold. The destination end of the packet only notifies a sending end of a flow marked by the ECN to reduce a speed of the flow, which does not affect uncongested flows, so that HOL and congestion spreading of the PFC are effectively improved.

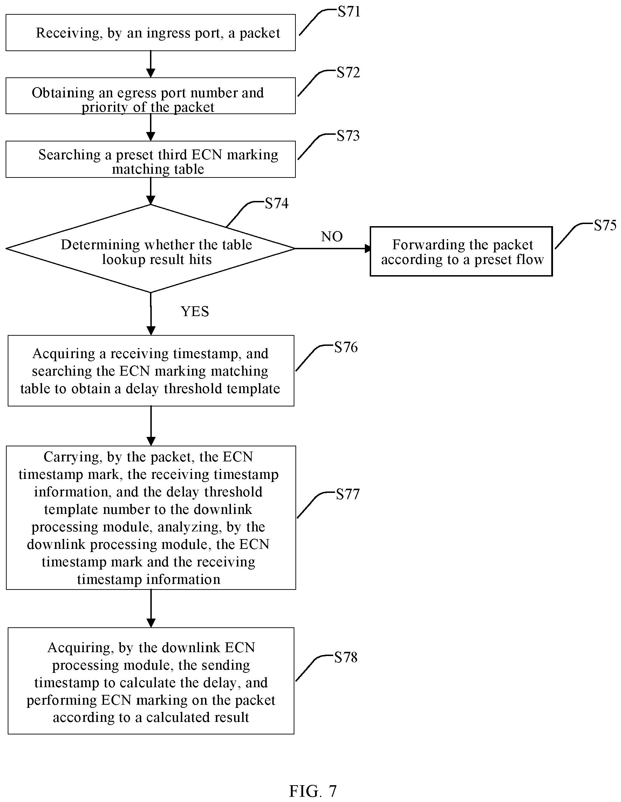

Fig. 7 is a flowchart of performing congestion notification marking according to an egress port and priority according to the present application. As shown in Fig. 7, in some implementations, a normal function of ECN marking is to be enabled based on an egress port and priority of the packet, but only determines whether to perform ECN marking according to congestion status of an egress queue. In the present application, ECN marking based on an internal delay may also be enabled based on the egress port and the priority of the packet, but represents a complete congestion status in the forwarding node. Based on the above scenario, the ECN marking function may be configured in the network node based on the egress port and the priority of the packet.

As shown in Fig. 7, a process of performing congestion notification marking according to the egress port and the priority may include operations S71 to S78.

At operation S71, receiving, by an ingress port, a packet.

At operation S72, acquiring an egress port number and priority of the packet. In this operation, after receiving the packet, the network node acquires the egress port number from a forwarding table in the uplink pipeline. Meanwhile, the priority of the packet is obtained by the network node in the uplink pipeline, the priority may be obtained by mapping an 802. 1p field in an Ethernet header, or may be obtained by mapping a Differentiated Services Code Point (DSCP) field in an IP header, or may be obtained by mapping through other flow classification means, which is not limited herein.

At operation S73, searching a preset third ECN marking matching table. In this operation, users can select one of a service choreographer, a controller, a network manager, a command line or the like to enable the delay ECN marking function based on "the egress port and the priority", and configure a corresponding delay threshold template, a main parameter in the configured template is the delay threshold. The configuration information may be recorded in the third ECN marking matching table. In the third ECN marking matching table, key words for table lookup are "the egress port number and the priority of the packet", and a table lookup result is a delay threshold template. Forms of table storage and lookup are not limited, may be items of ACL, or may be other types of RAM tables.

At operation S74, determining whether the table lookup result hits.

At operation S75, if the table lookup result does not hit (i.e., misses), forwarding the packet according to a preset flow.

At operation S76, if the table lookup result hits, performing ECN timestamp marking on the packet, acquiring a receiving timestamp, and searching the ECN marking matching table to obtain a delay threshold template.

Through the above operations S74 to S76, after the egress port number and the priority of the packet are obtained in the uplink pipeline, the uplink ECN processing module 11 continues to search the third ECN marking matching table by taking the egress port number and the priority of the packet as key words. If the table lookup result does not hit (i.e., misses), the ECN marking is not to be performed on the packet. If the lookup result hits, a delay threshold template number is obtained from the table lookup result, and simultaneously, an ECN timestamp mark is configured for the packet, and a system timestamp is obtained as a packet receiving timestamp. In this way, three pieces of information to be stamped on the packet in the uplink are completely obtained.

At operation S77, carrying, by the packet, the ECN timestamp mark, the receiving timestamp information, and the delay threshold template number to the downlink processing module 14, and analyzing, by the downlink processing module 14, the ECN timestamp mark and the receiving timestamp information.

The packet carrying the three pieces of information is forwarded in the network node. Forwarding designs of the three pieces of information together with the packet in the centralized and distributed network nodes may refer to packet forwarding processes in the network node device described above with reference to Fig. 2 and Fig. 3, and thus are not be repeated herein.

In some implementations, the downlink processing module is responsible for completing analyzing of the receiving timestamp mark, the timestamp information, and the delay threshold template, which may refer to operation S45 shown in Fig. 4, and thus is not repeated herein.

At operation S78, acquiring, by the downlink ECN processing module 15, the sending timestamp to calculate the delay, and performing ECN marking on the packet according to a calculated result. In this operation, the downlink ECN processing module 15 is responsible for determining the receiving timestamp mark, acquiring a sending timestamp, calculating a forwarding delay of the packet, and determining whether to perform ECN marking on the packet according to a comparison between the delay and the preset threshold. The processing flow may refer to operation S46 described in Fig. 4, and thus is not repeated herein.

After receiving the packet carrying the ECN mark, a destination end of the packet sends flow control information to notify a sending end to reduce the speed of the flow.

In the implementation shown in Fig. 7, the flow matching information is the egress port and the priority information; then operation S10 may include following operations S331 and S332. At operation S331, determining an egress port number of the packet by searching a preset packet forwarding table, and acquiring the priority information of the packet; at operation S323, in response to that a delay threshold template corresponding to the egress port number and the priority information is searched in a preset third congestion notification marking matching table, determining that the function of congestion notification marking is to be enabled for the packet.

In some implementations, in response to that no delay threshold template corresponding to the egress port number and the priority information is searched from the preset third congestion notification marking matching table, the function of congestion notification marking is determined not to be enabled for the packet.

Correspondingly, operation S11 of the configuring a delay threshold template number to be carried in the packet may include: at operation S334, taking a searched delay threshold template number corresponding to the egress port number and the priority information as the delay threshold template number to be carried.

The network node configures the delay ECN marking based on the egress port and the priority, and after receiving the packet carrying the ECN marking, a destination end of the packet sends flow control information to notify a sending end to reduce the speed of the flow.

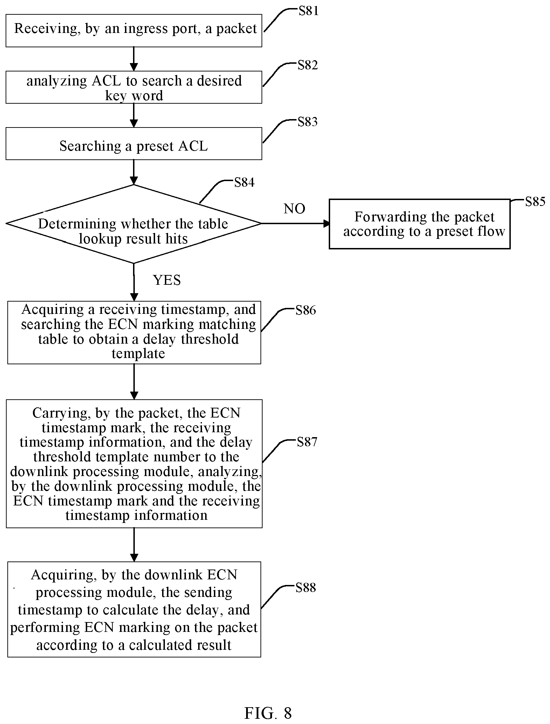

Fig. 8 is a flowchart of performing congestion notification marking according to an access control list according to the present application. In some implementations, the traffic to be subjected to the delay ECN marking may be matched according to configured feature fields of the packet based on an ingress ACL, fields to be matched with the ACL may be any feature field in the packet header or in the packet content, or may be metadata generated for the packet in the uplink pipeline, which is not limited therein. As shown in Fig. 8, a process of performing congestion notification marking according to the ACL may include following operations S81 to S88.

At operation S81, receiving, by an ingress port, a packet.

At operation S82, analyzing the ACL to search a desired key word. In this operation, after the network node receives the packet, the uplink pipeline searches the ACL in an ACL stage to perform flow matching, and if no rule hits, it indicates that ECN marking is not expected to be performed. If any rule hits, a delay threshold template number is obtained from a table lookup result, and simultaneously, an ECN timestamp mark is configured for the packet, and a system timestamp is obtained as a packet receiving timestamp. In this way, three pieces of information to be stamped on the packet in the uplink are completely obtained.

At operation S83, searching a preset ACL. In this operation, users can select one of a service choreographer, a controller, a network manager, a command line or the like to enable the delay ECN marking function based on the ACL, and configure a corresponding delay threshold template, a main parameter in the configured template is the delay threshold. The configuration information may be recorded in the ACL. In the ACL, the key word for table lookup may be any field described above, and a table lookup result is a delay threshold template.

At operation S84, determining whether the table lookup result hits.

At operation S85, if the table lookup result does not hit (i.e., misses), forwarding the packet according to a preset flow.

At operation S86, if the table lookup result hits, performing ECN timestamp marking on the packet, acquiring a receiving timestamp, and searching the ECN marking matching table to obtain a delay threshold template.

Through the above operations S84 to S86, after the network node receiving the packet, the uplink pipeline searches the ACL in an ACL stage to perform flow matching, and if no rule hits, it indicates that ECN marking is not expected to be performed. If any rule hits, a delay threshold template number is obtained from the table lookup result, and simultaneously, an ECN timestamp mark is configured for the packet, and a system timestamp is obtained as a packet receiving timestamp. In this way, three pieces of information to be stamped on the packet in the uplink are completely obtained.

The packet carrying the three pieces of information is forwarded in the network node. Forwarding designs of the three pieces of information together with the packet in the centralized and distributed network nodes may refer to packet forwarding processes in the network node device described above with reference to Fig. 2 and Fig. 3, and thus are not be repeated herein.

At operation S87, carrying, by the packet, the ECN timestamp mark, the receiving timestamp information, and the delay threshold template number to the downlink processing module 14, and analyzing, by the downlink processing module 14, the ECN timestamp mark and the receiving timestamp information. In this operation, the analysis of the ECN timestamp mark and the receiving timestamp information may refer to operation S45 described in Fig. 4, and will not be repeated herein.

At operation S88, acquiring, by the downlink ECN processing module 15, the sending timestamp to calculate the delay, and performing ECN marking on the packet according to a calculated result. In this operation, a forwarding delay of the packet is calculated, and whether to perform ECN marking on the packet is determined according to a comparison between the delay and the preset threshold. The processing flow may refer to operation S46 described in Fig. 4, and thus is not repeated herein.

In the implementation shown in Fig. 8, the flow matching information is feature information of the packet; then operation S10 may include following operation S341. At operation S341, in response to that a congestion notification marking number corresponding to the feature information of the packet is searched in a preset fourth congestion notification marking matching table, determining that the function of congestion notification marking is to be enabled for the packet.

The feature information of the packet includes: packet header information, any feature field information of the packet content, or metadata generated for the packet during the packet receiving stage.

In some implementations, if no delay threshold template number corresponding to the feature information of the packet is searched in the preset fourth congestion notification marking table, the function of congestion notification marking is not to be enabled for the packet.

Correspondingly, operation S11 of the configuring a delay threshold template number to be carried in the packet may include: at operation S343, taking a searched delay threshold template corresponding to the feature information of the packet as the delay threshold template of the packet.

The traffic to be subjected to the delay ECN marking may be matched according to configured feature fields of the packet based on an ingress ACL, and after receiving the packet carrying the ECN mark, a destination end of the packet sends flow control information to notify a sending end to reduce the speed of the flow.

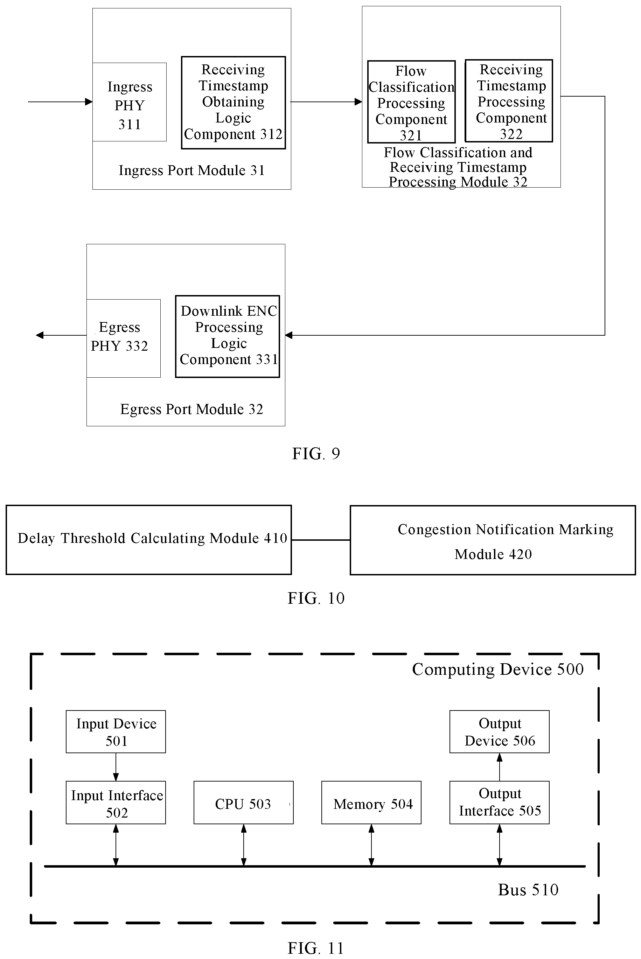

Fig. 9 is a schematic structural diagram of a network node obtaining timestamp information and performing congestion notification marking at a physical port according to the present application.

In the implementations described above with reference to Fig. 4 to Fig. 8, the processing of the receiving timestamp is performed in the uplink ECN processing module 11, and sending the timestamp and the ECN marking are performed in the downlink ECN processing module 15.

The present application further provides a method for marking a receiving timestamp in an ingress PHY module and realizing a downlink ECN processing logic in an egress PHY module, which makes positions of the receiving and sending timestamps respectively closer to the receiving and sending ports, so that the complete forwarding delay of the packet in the network node can be more accurately reflected.

It should be understood that the present application provides a method for stamping and performing ECN marking on the PHY, which does not limit the stamping and ECN marking must to be performed on the PHY.

In Fig. 9, the network node may include an ingress port module 31, a flow classification and receiving timestamp processing module 32 and an egress port module 33. The ingress port module 31 may include an ingress PHY 311 and a receiving timestamp obtaining logic component 312. The flow classification and receiving timestamp processing module 32 may include a flow classification processing component 321 and a receiving timestamp processing component 322. The egress port module 33 may include a downlink ENC processing logic component 331 and an egress PHY 332.

In the implementation shown in Fig. 9, ingress delay ECN marking being enabled and egress delay ECN marking being enabled may be respectively configured at the ingress port module 31 and the egress port module 33.

As an example, users can select one of a service choreographer, a controller, a network manager, a command line or the like to enable the delay ECN marking function for the network node, and configure a delay threshold template, a main parameter in the configured template is the delay threshold.

After the network node receives a packet, if a receiving direction of the ingress port module 31 is not configured with ECN marking being enabled, the packet bypasses the receiving timestamp obtaining logic component 312 and is transmitted to the flow classification and receiving timestamp processing module 32 in the uplink pipeline. If the receiving direction of the ingress port module 31 is configured with ECN marking being enabled, the ingress port module 31 stamps a receiving timestamp on the received packet, and transmits the packet carrying the receiving timestamp to the flow classification and receiving timestamp obtaining logic component 312 in the uplink pipeline.

The flow classification and receiving timestamp processing module 32 may perform flow classification on the packet through the flow classification processing component 321, and perform the above mapping based on the delay threshold template on the delay ECN mark through the receiving timestamp processing component 322.

Different from the implementations described above with reference to Fig. 4 to Fig. 8, in this implementation, the receiving timestamp is not to be obtained in the uplink ECN processing module 11, but a timestamp carried by the packet from the ingress PHY 311 is directly used as the receiving timestamp. It should be noted that, considering that various flow classification and subsequent processing logics are relatively complex, such processing logics may not be implemented in the PHY module, but are completed by the flow classification and receiving timestamp processing module 32. In some implementations, a processing logic of the uplink delay ECN may also be completely implemented in the ingress port module 31, which is not limited herein.

If the packet reaches the egress port module 33, and a sending direction of the egress port module 33 does not enable the delay ECN marking, the packet bypasses the downlink ENC processing logic component 331 of the egress port module 33 and is directly transmitted to the PHY for processing. If the sending direction of the egress port module 33 enables the delay ECN marking, a complete logic of downlink ECN processing, including obtaining a sending timestamp of the packet, is to be completed in the PHY module; a difference value between the receiving timestamp and the sending timestamp is calculated as a forwarding delay of the packet; a delay threshold is obtained through a delay threshold template, and if an actual forwarding delay exceeds the configured delay threshold, the ECN marking is performed on the packet, if the actual forwarding delay does not exceed the configured delay threshold, the ECN marking is not to be performed on the packet. The delay threshold may also be obtained at a downlink stage prior to the PHY module and then to be carried to the PHY module, which is not limited herein.

After the downlink ECN processing logic of the egress port module 33 performs ECN marking on the packet, the packet is further processed by the egress PHY and then sent from the egress port. After receiving the packet carrying the ECN mark, a destination end of the packet sends flow control information to notify a sending end to reduce the speed of the flow.

In the implementations shown in Fig. 9, the receiving timestamp information is timestamp information obtained from a PHY port receiving the packet, or system timestamp information obtained at a preset packet receiving stage; the sending timestamp information is system timestamp information obtained from a packet processing stage before the packet is sent, or timestamp information obtained from a PHY port sending the packet.

The receiving timestamp may be stamped at the ingress PHY module, and the sending timestamp is stamped at the egress PHY module, so as to implement downlink ECN processing logic, which makes positions of the receiving and sending timestamps respectively closer to the receiving and sending ports, so that the complete forwarding delay of the packet in the network node can be more accurately reflected.

It some implementations, after operation S130, the congestion control method may further include: at operation S150, sending a packet carrying a congestion notification mark to a preset destination device, the packet carrying the congestion notification mark being configured to trigger the destination device to send flow control information in the destination device, and the flow control information being used to notify a sending end of data flow corresponding to the packet to reduce the speed of the data flow.

According to the packet congestion control method provided in the present application, the internal complete forwarding delay in the network node is detected for performing the ECN marking, and the ECN marking is performed on the packet by calculating the complete forwarding delay of the packet and based on the delay, so that delay expectations of the low-delay services in the network transmission can be ensured. The ECN marking technology, based on the complete delay in the network node, provided in the present application is a supplement to the existing ECN marking technology based on queue congestion in the lossless network, and meanwhile, can effectively improve the PFC HOL.

The congestion control apparatus provided in the present application is described in detail below with reference to the accompanying drawings. Fig. 10 is a schematic structural diagram of a congestion control apparatus according to the present application. As shown in Fig. 10, the congestion control apparatus includes a delay threshold calculating module 410 and a congestion notification marking module 420.

The delay threshold calculating module 410 is configured to calculate a forwarding delay of a received packet in a node device according to receiving timestamp information and sending timestamp information of the packet.

The congestion notification marking module 420 is configured to, in response to that the forwarding delay of the packet in the node device is greater than a preset delay threshold of the packet, perform congestion notification marking on the packet, so as to perform congestion control on the packet through the congestion notification marking

According to the congestion control apparatus provided in the present application, the ECN marking is performed on the packet by calculating the complete forwarding delay of the packet and based on the delay, so that delay expectations of the low-delay services in the network transmission can be ensured; and the ECN marking technology, based on the complete delay in the network node, provided in the present application is a supplement to the existing ECN marking technology based on queue congestion in the lossless network, and meanwhile, can effectively improve the PFC HOL.

In some implementations, the congestion control apparatus further includes: a function enabling determining component configured to, in a preset packet receiving stage, determine whether to enable a function of congestion notification marking for the packet according to flow matching information corresponding to the received packet, the flow matching information including at least one of ingress traffic, egress traffic, an ingress port, an egress port, a priority of the packet, or feature information of the packet; and an information configuring component configured to, in response to that the function of congestion notification marking is determined to be enabled, acquire the receiving timestamp information of the packet, and configure a delay threshold template of the packet including the preset delay threshold.

In some implementations, the congestion control apparatus is further configured to determine a first timestamp mark and a corresponding delay threshold template number of the packet; the first timestamp mark is configured to indicate that the function of congestion notification marking is enabled, and the delay threshold template number is configured to index a configured delay threshold template; the delay threshold calculating module 410 is further configured to, before sending the packet, in response to that the first timestamp mark of the packet is detected, calculate a difference value between the receiving timestamp information and the obtained sending timestamp information to obtain the forwarding delay of the packet; and acquire the preset delay threshold of the packet according to the delay threshold template number corresponding to the packet.

The first timestamp mark, the receiving timestamp information and the corresponding delay threshold template number are carried at specified position of the packet or are transmitted as the channel associated information of the packet.

In some implementations, the flow matching information includes the ingress port; the function enabling determining component may be configured to, in response to that the packet is a packet received by the node device from a preset ingress port and the ingress traffic is lossless service traffic, determine that the function of congestion notification marking is to be enabled for the packet; the information configuring component is further configured to take a delay threshold template corresponding to a delay-expectation service carried by the packet as the delay threshold template of the packet, different delay threshold templates are preset for different delay-expectation services.

In some implementations, the flow matching information includes the egress port; the congestion control apparatus may be configured to, in response to that the packet is a packet received by the node device serving as a preset server and an egress port of the preset server is configured to send data of multi-to-one Incast traffic in a preset data center network, determine an egress port number of the packet by searching a preset packet forwarding table; and the function enabling determining component may be configured to, in response to that a delay threshold template corresponding to the egress port number is searched in a preset first congestion notification marking matching table, determine that the function of congestion notification marking is to be enabled for the packet; the information configuring component is further configured to take a searched delay threshold template corresponding to the egress port number as the delay threshold template of the packet.

In some implementations, the information configuring component may be further configured to: set a delay threshold template number to be carried as a null value; and after determining that the function of congestion notification marking on the packet is enabled and before sending the packet, acquire a delay threshold template corresponding to the egress port number from a preset attribute table of a downlink egress port.

In some implementations, the flow matching information includes the ingress port and the priority of the packet; the function enabling determining component may be configured to, in response to that the packet is a packet received by the node device from the ingress port and having priority information, the ingress traffic of the node device is lossless service traffic, and a delay threshold template number corresponding to an ingress port number and the priority information of the packet is searched in a preset second congestion notification marking matching table, determine that the function of congestion notification marking is to be enabled for the packet. The information configuring component is further configured to take a searched delay threshold template corresponding to the ingress port number and the priority information as the delay threshold template of the packet.

In some implementations, the flow matching information includes the egress port and the priority of the packet; the congestion control apparatus may further include an egress port and priority acquiring module configured to determine an egress port number of the packet by searching a preset packet forwarding table, and acquire the priority information of the packet; and the function enabling determining component may be configured to, in response to that a delay threshold template corresponding to the egress port number and the priority information is searched in a preset third congestion notification marking matching table, determine that the function of congestion notification marking is to be enabled for the packet; the information configuring component is further configured to take a searched delay threshold template corresponding to the egress port number and the priority information as the delay threshold template of the packet.

In some implementations, the flow matching information includes the feature information of the packet; the function enabling determining component may be configured to, in response to that a congestion notification marking number corresponding to the feature information of the packet is searched in a preset fourth congestion notification marking matching table, determine that the function of congestion notification marking is to be enabled for the packet, the feature information of the packet includes packet header information, any feature field information of the packet content, or metadata generated for the packet during the packet receiving stage; the information configuring component is further configured to take a searched delay threshold template corresponding to the feature information of the packet as the delay threshold template of the packet.

In some implementations, in the preset packet receiving stage, the information configuring component may be further configured to, in response to that the function of congestion notification marking is determined not to be enabled for the packet, configure a second timestamp mark of the packet; the congestion control apparatus may further include a packet forwarding module configured to, before sending the packet, determine, according to the second timestamp mark, that the function of congestion notification marking is not enabled, and forward the packet according to a preset forwarding mode, the second timestamp mark being carried at a specified position of the packet or being transmitted as channel associated information of the packet.

In some implementations, the receiving timestamp information is timestamp information acquired from a physical port receiving the packet, or system timestamp information obtained in the preset packet receiving stage; and the sending timestamp information is system timestamp information obtained from a packet processing stage before sending the packet, or timestamp information obtained from a physical port sending the packet.

In some implementations, in response to that the node device is a centralized forwarding node device, the packet receiving stage includes any stage of preforming packet processing from the ingress port of the node device to a forwarding chip of the node device; and the packet processing stage before sending the packet includes any stage of performing packet processing from the forwarding chip of the node device to the egress port of the node device.

In some implementations, in response to that the node device is a distributed forwarding node device, the packet receiving stage includes any stage of preforming packet processing from the ingress port of the node device to an uplink forwarding chip of the node device; and the packet processing stage before sending the packet includes any stage of performing packet processing from a downlink forwarding chip of the node device to the egress port of the node device.

In some implementations, in response to that the node device is a centralized forwarding node device, the congestion control apparatus further includes an internal forwarding module configured to, after the first timestamp mark, the receiving timestamp information and the corresponding delay threshold template being carried in the packet, and before sending the packet, forward the received packet in the node device, and send the packet to a forwarding chip of the node device.

In some implementations, in response to that the node device is a distributed forwarding node device, the congestion control apparatus is further configured to, after the first timestamp mark, the receiving timestamp information and the corresponding delay threshold template being carried in the packet, and before sending the packet, forward the received packet to downlink forwarding information of the node device through a switching network in the node device.

During the packet passing through the switching network, the first timestamp mark, the receiving timestamp information and the corresponding delay threshold template number are carried at a specified position of the packet, the specified position is in the packet or in an additional packet header corresponding to the switching network.

In some implementations, the congestion control apparatus further include a packet sending module configured to send a packet carrying a congestion notification mark to a preset destination device; the packet carrying the congestion notification mark is configured to trigger the destination device to send flow control information in the destination device, and the flow control information is used to notify a sending end of data flow corresponding to the packet to reduce the speed of the data flow.

According to the congestion control apparatus provided in the present application, the ECN marking is performed on the packet by calculating the complete forwarding delay of the packet and based on the delay, so that delay expectations of the low-delay services in the network transmission can be ensured. The congestion control apparatus is a supplement to the existing ECN marking technology based on queue congestion in the lossless network, and meanwhile, can effectively improve the PFC HOL.

It should be understood that the present application is not limited to the particular configuration and processing described above and shown in the accompanying drawings. For convenience and simplicity of description, detailed description of the known methods is omitted in the present application, and specific working processes of the system, the module and the unit described above may refer to corresponding processes of the above method, and thus are not repeated here.

Fig. 11 is a schematic diagram of exemplary hardware architecture of a computing device according to the present application. As shown in Fig. 11, a computing device 500 includes an input device 501, an input interface 502, a central processing unit (CPU) 503, a memory 504, an output interface 505, and an output device 506. The input interface 502, the CPU 503, the memory 504, and the output interface 505 are interconnected via a bus 510, and the input device 501 and the output device 506 are connected to the bus 510, and are further connected to other components of the computing device 500, via the input interface 502 and the output interface 505, respectively.

Specifically, the input device 501 receives input information from the outside and transmits the input information to the CPU 503 through the input interface 502; the CPU 503 processes the input information based on computer-executable instructions stored in the memory 504 to generate output information, temporarily or permanently stores the output information in the memory 504, and then transmits the output information to the output device 506 through the output interface 505; the output device 506 outputs the output information outside of computing device 500 to be use by a user.

In some implementations, the computing device shown in Fig. 11 may be implemented as a network node device including: a memory configured to store a program; a processor configured to execute the program stored in the memory to perform at least one operation of the congestion control method provided by the embodiments of the present application.

The above description is only for exemplary embodiments of the present application, but is not intended to limit the scope of the present application. In general, the present application may be implemented in hardware or special purpose circuits, software, logic or any combination thereof. For example, some aspects may be implemented in hardware, while other aspects may be implemented in firmware or software which may be executed by a controller, a microprocessor or other computing devices, although the present application is not limited thereto.

The present application may be implemented by a data processor of a mobile device executing computer program instructions, for example in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object code written in any combination of one or more programming languages.

The block diagram of any logical flowchart in the accompanying drawings of the present application may represent program operations; or may represent interconnected logic circuits, modules, and functions; or may represent a combination of program operations and logic circuits, modules, and functions. A computer program may be stored in the memory. The memory may be of any type suitable for the local technical environment and may be implemented by using any suitable data storage technology, such as, but is not limited to, a Random Access Memory (RAM), a Read-Only Memory (ROM), an optical storage device and system (a digital video disc (DVD) or a compact disc(CD)) and the like. The computer-readable medium may include a non-transitory storage medium. The data processor may be of any type suitable for the local technical environment, such as, but is not limited to, a general computer, a specific computer, a microprocessor, a digital signal processor (DSP), an application specific integrated circuit (ASIC), a field programmable gate array (FGPA), and a processor based on a multi-core processor architecture.

Through exemplary and non-limiting examples, a detailed description of the exemplary embodiments of the present application is provided above. Various modifications and adaptations to the above embodiments may be apparent to those skilled in the relevant arts with reference to the accompanying drawings and the appended claims, without departing from the scope of the application. Accordingly, the proper scope of the application is to be determined according to the claims.

## Claims

1. A congestion control method, comprising:
calculating a forwarding delay of a received packet in a node device according to receiving timestamp information and sending timestamp information of the packet; and
in response to that the forwarding delay of the packet in the node device is greater than a preset delay threshold of the packet, performing congestion notification marking on the packet, so as to perform congestion control on the packet through the congestion notification marking.

2. The method of claim 1, before the calculating a forwarding delay of a received packet in a node device according to receiving timestamp information and sending timestamp information of the packet, further comprising:
in a preset packet receiving stage, determining whether to enable a function of congestion notification marking for the packet according to flow matching information corresponding to the received packet, the flow matching information comprising at least one of ingress traffic, egress traffic, an ingress port, an egress port, a priority of the packet, or feature information of the packet; and
in response to that the function of congestion notification marking is determined to be enabled, acquiring the receiving timestamp information of the packet, and configuring a delay threshold template of the packet comprising the preset delay threshold.

3. The method of claim 2, after the acquiring the receiving timestamp information of the packet, and configuring a delay threshold template of the packet, further comprising:
determining a first timestamp mark and a corresponding delay threshold template number of the packet, the first timestamp mark being configured to indicate that the function of congestion notification marking is enabled, and the delay threshold template number being configured to index a configured delay threshold template; and
the calculating a forwarding delay of a received packet in a node device according to receiving timestamp information and sending timestamp information of the packet comprises: before sending the packet, in response to that the first timestamp mark of the packet is detected, calculating a difference value between the receiving timestamp information and the sending timestamp information to obtain the forwarding delay of the packet; and acquiring the preset delay threshold of the packet according to the delay threshold template number corresponding to the packet;
wherein the first timestamp mark, the receiving timestamp information and the corresponding delay threshold template number are carried at a specified position of the packet or are transmitted as channel associated information of the packet.

4. The method of claim 2, wherein the flow matching information is the ingress port;
the determining whether to enable a function of congestion notification marking for the packet according to flow matching information corresponding to the received packet comprises: in response to that the packet is a packet received by the node device from a preset ingress port and the ingress traffic is lossless service traffic, determining that the function of congestion notification marking is to be enabled for the packet; and
the configuring a delay threshold template of the packet comprises:
taking a delay threshold template corresponding to a delay-expectation service carried by the packet as the delay threshold template of the packet, wherein different delay threshold templates are preset for different delay-expectation services.

5. The method of claim 2, wherein the flow matching information is the egress port;
the determining whether to enable a function of congestion notification marking for the packet according to flow matching information corresponding to the received packet comprises: in response to that the packet is a packet received by the node device serving as a preset server and an egress port of the preset server is configured to send data of multi-to-one Incast traffic in a preset data center network, determining an egress port number of the packet by searching a preset packet forwarding table; and in response to that a delay threshold template corresponding to the egress port number is searched in a preset first congestion notification marking matching table, determining that the function of congestion notification marking is to be enabled for the packet; and
the configuring a delay threshold template of the packet comprises:
taking a searched delay threshold template corresponding to the egress port number as the delay threshold template of the packet.

6. The method of claim 5, wherein the configuring a delay threshold template of the packet comprises:
setting a delay threshold template number to be carried as a null value; and
after determining that the function of congestion notification marking of the packet is enabled and before sending the packet, acquiring a delay threshold template corresponding to the egress port number from a preset attribute table of a downlink egress port.

7. The method of claim 2, wherein the flow matching information is the ingress port and the priority of the packet;
the determining whether to enable a function of congestion notification marking for the packet according to flow matching information corresponding to the received packet comprises:
in response to that the packet is a packet received by the node device from the ingress port and having priority information, the ingress traffic of the node device is lossless service traffic, and a delay threshold template number corresponding to an ingress port number and the priority information of the packet is searched in a preset second congestion notification marking matching table, determining that the function of congestion notification marking is to be enabled for the packet; and
the configuring a delay threshold template of the packet comprises:
taking a searched delay threshold template corresponding to the ingress port number and the priority information as the delay threshold template of the packet.

8. The method of claim 2, wherein the flow matching information is the egress port and the priority of the packet;
the determining whether to enable a function of congestion notification marking for the packet according to flow matching information corresponding to the received packet comprises:
determining an egress port number of the packet by searching a preset packet forwarding table, and acquiring the priority information of the packet; and in response to that a delay threshold template corresponding to the egress port number and the priority information is searched in a preset third congestion notification marking matching table, determining that the function of congestion notification marking is to be enabled for the packet; and
the configuring a delay threshold template of the packet comprises:
taking a searched delay threshold template corresponding to the egress port number and the priority information as the delay threshold template of the packet.

9. The method of claim 2, wherein the flow matching information is the feature information of the packet;
the determining whether to enable a function of congestion notification marking for the packet according to flow matching information corresponding to the received packet comprises:
in response to that a congestion notification marking number corresponding to the feature information of the packet is searched in a preset fourth congestion notification marking matching table, determining that the function of congestion notification marking is to be enabled for the packet; and
the configuring a delay threshold template of the packet comprises:
taking a searched delay threshold template corresponding to the feature information of the packet as the delay threshold template of the packet,
wherein the feature information of the packet comprises: packet header information, any feature field information of a packet content, or metadata generated for the packet during the packet receiving stage.

10. The method of any one of claims 2 to 9, in the preset packet receiving stage, further comprising:
in response to that the function of congestion notification marking is determined not to be enabled for the packet, configuring a second timestamp mark of the packet; and
before sending the packet, determining, according to the second timestamp mark, that the function of congestion notification marking is not enabled, and forwarding the packet according to a preset forwarding mode,
wherein the second timestamp mark is carried at a specified position of the packet or is transmitted as channel associated information of the packet.

11. The method of any one of claims 2 to 9, wherein,
the sending timestamp information is timestamp information acquired from a physical port receiving the packet, or system timestamp information obtained in the preset packet receiving stage; and
the sending timestamp information is system timestamp information obtained from a packet processing stage before sending the packet, or timestamp information obtained from a physical port sending the packet.

12. The method of claim 11, wherein,
in response to that the node device is a centralized forwarding node device, the packet receiving stage comprises any stage of preforming packet processing from the ingress port of the node device to a forwarding chip of the node device; and the packet processing stage before sending the packet comprises any stage of performing packet processing from the forwarding chip of the node device to the egress port of the node device; and
in response to that the node device is a distributed forwarding node device, the packet receiving stage comprises any stage of preforming packet processing from the ingress port of the node device to an uplink forwarding chip of the node device; and the packet processing stage before sending the packet comprises any stage of performing packet processing from a downlink forwarding chip of the node device to the egress port of the node device.

13. The method of claim 3, further comprising:
in response to that the node device is a centralized forwarding node device, forwarding the received packet in the node device, and sending the packet to a forwarding chip of the node device; and
in response to that the node device is a distributed forwarding node device, forwarding the received packet to downlink forwarding information of the node device through a switching network in the node device;
wherein, during the packet passing through the switching network, the first timestamp mark, the receiving timestamp information and the corresponding delay threshold template number are carried at a specified position of the packet, the specified position is in the packet or in an additional packet header corresponding to the switching network.

14. The method of any one of claims 2 to 9, after the performing congestion notification marking on the packet, further comprising:
sending a packet carrying a congestion notification mark to a preset destination device,
wherein the packet carrying the congestion notification mark is configured to trigger the destination device to send flow control information in the destination device, and the flow control information is used to notify a sending end of data flow corresponding to the packet to reduce a speed of the data flow.

15. A congestion control apparatus, comprising:
a delay threshold calculating module configured to calculate a forwarding delay of a received packet in a node device according to receiving timestamp information and sending timestamp information of the packet; and
a congestion notification mark carrying module configured to, in response to that the forwarding delay of the packet in the node device is greater than a preset delay threshold of the packet, perform congestion notification marking on the packet, so as to perform congestion control on the packet through the congestion notification marking.

16. A network node device, comprising:
at least one processor; and
a memory having at least one program stored thereon, the at least one program, when executed by the at least one processor, causes the least one processor to perform the method of any one of claims 1 to 14.

17. A computer-readable storage medium having a computer program stored thereon, the computer program, when executed by a processor, causes the processor to perform the method of any one of claims 1 to 14.
